# EUROPEAN PATENT SPECIFICATION

(11) **EP 1 887 732 B1**
(45) Date of publication and mention of the grant of the patent: **30.06.2010**
(21) Application number: 06742044.8
(22) Date of filing: 30.05.2006
(51) Int. Cl.: H04L 12/14, H04N 7/16

(54) **A METHOD AND SYSTEM FOR CONTENT CHARGING**
VERFAHREN UND SYSTEM ZUR VERGEBÜHRUNG VON INHALTEN
PROCEDE ET SYSTEME DE CHARGEMENT DE CONTENU

(30) Priority: 30.05.2005 CN 200510073415
(43) Date of publication of application: 13.02.2008
(73) Proprietor: Huawei Technologies Co., Ltd., Longgang District, Shenzhen Guangdong 518129 (CN)
(72) Inventor: ZHAO, Hang, Huawei Administration Building, Shenzhen Guangdong 518129 (CN)
(74) Representative: Pfenning, Meinig & Partner GbR
(86) International application number: PCT/CN2006/001156
(87) International publication number: WO 2006/128371

(56) References cited:
- EP-A- 1 296 481
- EP-A1- 1 400 934
- WO-A1-01/59990
- CN-A- 1 556 634
- US-A1- 2002 066 033
- US-A1- 2004 254 999

## Description

### Field of the Invention

The present invention relates to the technical field of network communications, in particular, to a method and a system for content charging.

### Background of the Invention

With the rapid development of the Internet, content services become more and more abundant. Correspondingly, Internet Content Providers (ICPs) for getting profit by providing contents come on the scene. By cooperating with the ICP, service providers may increase the income of the access service by expanding the scale of network users on one hand, and earn the profit sharing of content income of the ICP on the other hand. At the same time, the ICP may obtain a low-cost channel for selling its content service rapidly.

The content platform of the service provider is developed on such background. The general mode of the content platform is as follows: The service provider provides a technical platform, and the ICP issues its content service via this platform. The service provider performs advertising, authentication, charging for the use of the content service via the platform. The user uses the content service provided by each ICP via the platform. The content platform records various fees caused by the user, and all of the fees will be recorded on a content account provided to the user by the service provider. With this content platform, the user does not need to settle accounts with each ICP; instead, the user only needs to settle accounts with the service provider.

The existing content charging solution for this content platform is usually implemented as follows:

A user connects to the network, logs in a portal website Portal Server, and connects to a Content Server of an ICP via a content channel. If the user is interested in a content provided by the ICP, then he/she clicks the button "OK", and the ICP Content Server will send an authentication request to the content platform of the service provider. If the authentication is passed, the right to use the content is assigned to the user and a charging start message is sent to the content platform.

To ensure the accuracy of the charging, the Content Server of the ICP sends an intermediate charging message to the content platform at a certain time interval during the usage of the content. When the user logs out the Content Server, the Content Server of the ICP sends a charging completion message to the content platform.

The content platform processes the charging message in real time, and performs rating and accounting on the content consumption of the user according to the information in the charging message such as service number, time length, traffic flow, etc., together with the charging policy of the service.

In the prior art, strict requirements are laid on the interconnection technology between the content platform and the ICP. The ICP has to carry out customized development according to the content platform authentication and charging interface provided by the service provider, and joint debugging and testing should be performed after the development. Services may only be formally issued after the testing is passed. Thus, the cost is very high.

Some small-scale ICPs are weak in technical strength and they are not able to carry out customized development according to the charging interface. Some other ICPs purchase their service contents, such as multiplayer-fighting games, from other software company, so they have no source code for interface development, and are not able to implement content charging for such services.

Quality of Service (QoS) is required for some content services. For example, Video On Demand (VOD) service requires a broad bandwidth. However, in the mode aforementioned, the bandwidth may not be dynamically adjusted according to the service, and it is disadvantageous for operation and management.

In the actual operation of the ICP, it is difficult for the service provider to control the correctness of the service number, traffic flow and time length in the charging message, thus accurate charging may not be performed.
US 2002/066033 A1 discloses a method in which content resources are managed. A request is received from a user for access to a source of content resources. It is determined that the user is authorized for access to the source. A portal Web page is generated based on a set of content element data applicable to the subscriber. The portal Web page is returned to the user. It is further disclosed that a system for use in managing content resources has a switch for receiving requests from Web browsers, a content resource management engine in communication with the switch, and a billing system in communication with the content resource management engine.
US 2004/254999 A1 discloses a content distribution system including a content source and a plurality of consumer networks including a controller and a consumer storage device. A distribution network couples the content source to the controllers of the consumer networks. The distribution network includes network storage devices and network processors. A grid computing platform includes the controllers, the network processors, the consumer storage devices and the network storage devices. The grid computing platform provides storage of the content across network storage devices and consumer storage devices and distribution of the content to one or more of the consumer networks.

### Summary of the Invention

The present invention provides a method and a system for implementing content charging at low cost, so that the service charging may be more accurate and reasonable, and the bandwidth may be adjusted dynamically according to the service.

The present invention provides a method for content charging, including:

sending, by a Portal Server, a service activation request to a Policy Server, based on a service request from a user;

responding to the service activation request, determining a service policy corresponding to the service request, and delivering a service policy activation message to a content control gateway, by the Policy Server;

executing the service policy and reporting user service consumption information to the Policy Server by the content control gateway; and permitting the user to use the service, and charging according to the user service consumption information reported by the content control gateway, by the Policy Server.

The method further includes:

sending, by the Portal Server, a service deactivation request to the Policy Server, when a request for stopping the service from the user is received; and

responding to the service deactivation request, delivering a service policy cancellation message, performing rating and accounting according to the consumption information, by the Policy Server.

The content control gateway reports the user service consumption information to the Policy Server periodically during the service;

The Policy Server performs rating according to the user service consumption information, and settles accounts on the service consumption of the user according to each rating information after the user stops using the service.

After responding to the service activation request, the Policy Server queries a preset correlation table between the service and the service policy according to the service activation request, determines the service policy corresponding to the service, and extracts the parameters needed for executing the service policy, then fills the parameters in the service policy activation message and delivers the service policy activation message to the content control gateway.

Wherein, the service policy message includes the information of the source IP address, destination IP address, destination port, destination service resource and traffic flow information of the network packet.

The content control gateway grants the right to the source IP address of the user network packet to access the destination IP address, destination port and destination service resource, and controls the network flow according to the traffic flow information in the policy message.

The content control gateway distinguishes between the content data flows according to the Content Server or the service port of the content, controls the content data flow and collects the consumption information.

In another aspect of the invention, there is provided a system for content charging, which includes a Portal Server and a Content Server, wherein

the system further includes a Policy Server and a content control gateway, the Policy Server is connected with the Portal Server and the content control gateway and is adapted to deliver a service policy activation message and a service policy cancellation message, perform rating and charging according to user service consumption information reported by the content control gateway;

the content control gateway is connected with the Content Server and is adapted to control access to the Content Server of the user according to the access right, count the service consumption information and report the user service consumption information to the Policy Server for charging.

The Policy Server includes a central control module, a charging engine module, a portal interface module and a device interface module.

The central control module is connected with the charging engine module, portal interface module and device interface module, and is adapted to respond to a service activation request sent by the portal interface module, convert the service activation request into a service policy message corresponding to the service, deliver a service policy activation message via the device interface module, receive user service consumption information reported by the device interface module, and invoke the charging engine module for rating.

The portal interface module is adapted to receive a service request from the user, send a service activation request or a service deactivation request to the central control module, and return the execution result of the service request.

The device interface module is adapted to forward the policy message delivered by the central control module, and report policy execution information and service consumption information to the central control module.

The charging engine module is adapted to receive an invoking instruction from the central control module and perform rating and charging according to the user service consumption information.

The content control gateway includes a central control module, a flow classification module, a content filtration module, a charging collection module and an interface module.

The central control module is adapted to receive a policy sent by the Policy Server, and interact with the flow classification module, content filtration module and charging collection module for interpreting and executing the policy.

The flow classification module is adapted to check, classify, control a source IP address, a destination IP address and destination port information of a network packet on the IP layer, and permit a network flow that conforms to the policy to pass.

The content filtration module is adapted to check, classify, control resources to be accessed by the network packet on the application layer, and permit the network flow that conforms to the policy to pass.

The charging collection module is adapted to collect the time length and the traffic flow information of the network flow, and report the original charging data to the central control module.

The interface module is adapted to provide an interface between the central control module and the Policy Server.

In still another aspect of the invention, there is provided a Policy Server for implementing content charging, which includes a central control module, a charging engine module, a portal interface module and a device interface module.

The central control module is connected with the charging engine module, portal interface module and device interface module, and is adapted to receive a service activation request sent by the portal interface module, convert the service activation request into a service policy message corresponding to the service, deliver the service policy activation message via the device interface, receive user service consumption information reported by the device interface module, and invoke the charging engine module for rating.

The portal interface module is adapted to receive a service request from the user, send a service activation request or a service deactivation request to the central control module, and return the execution result of the service request.

The device interface module is adapted to forward the policy message delivered by the central control module, and report policy execution information and service consumption information to the central control module.

The charging engine module is adapted to receive an invoking instruction from the central control module and perform rating and charging according to the user service consumption information.

The server further includes a database interface and a memory database, Through the database interface, an external database and the memory database may be accessed. The memory database is adapted to store policy data, charging data, configuration data and user session data, and receive an instruction from the central control module for updating the data.

The invention further provides a content control gateway for implementing the charging method according to claim 1, which includes a central control module, a flow classification module, a content filtration module, a charging collection module and an interface module.

The central control module is adapted to receive a policy sent by the Policy Server, and interact with the flow classification module, content filtration module and charging collection module for interpreting and executing the policy.

The flow classification module is adapted to check, classify and control a source IP address, a destination IP address and destination port information of a network packet on the IP layer, and only permit a network flow that conforms to the policy to pass.

The content filtration module is adapted to check, classify and control resources to be accessed by the network packet on the application layer, and only permit the network flow that conforms to the policy to pass.

The charging collection module is adapted to collect the time length and the traffic flow information of the network flow, and report the original charging data to the central control module.

The interface module is adapted to provide an interface between the central control module and the Policy Server.

In summary, in the method and system for content charging according to the embodiments of the invention, by determining the service policy corresponding to the service information and executing the service policy, the user is controlled to use the service, the content data flows are distinguished according to the Content Server or the service port of the content, and the content data flow is controlled and the consumption information is collected. So that charging may be performed according to the user service consumption information reported. As a result, the interconnection difficulty and interconnection cost between the ICP Content Server and the content platform of the service provider may be lowered greatly, and a non-coding interconnection operation solution may be provided. Thus, the service provider may rapidly dispose a content service, the ICP may be effectively prevented from falsifying data, and accurate charging data may be provided. At the same time, the corresponding network QoS may be ensured according to the requirements of a certain content service, thus an overall QoS may be provided, and the market competitive power may be improved.

### Brief Description of the Drawings

Figure 1 is a schematic diagram showing an exemplary system structure according to an embodiment of the invention;

Figure 2 is a schematic diagram showing the structure of the Policy Server according to an embodiment of the invention;

Figure 3 is a schematic diagram showing the structure of the content control gateway according to an embodiment of the invention; and

Figure 4 is a flow chart of the method according to an embodiment of the invention.

### Detailed Description of the Embodiments

To make the principle, characteristics and advantages of the invention clearer, the invention will now be described in detail hereinafter in conjunction with the embodiments and the drawings of the invention.

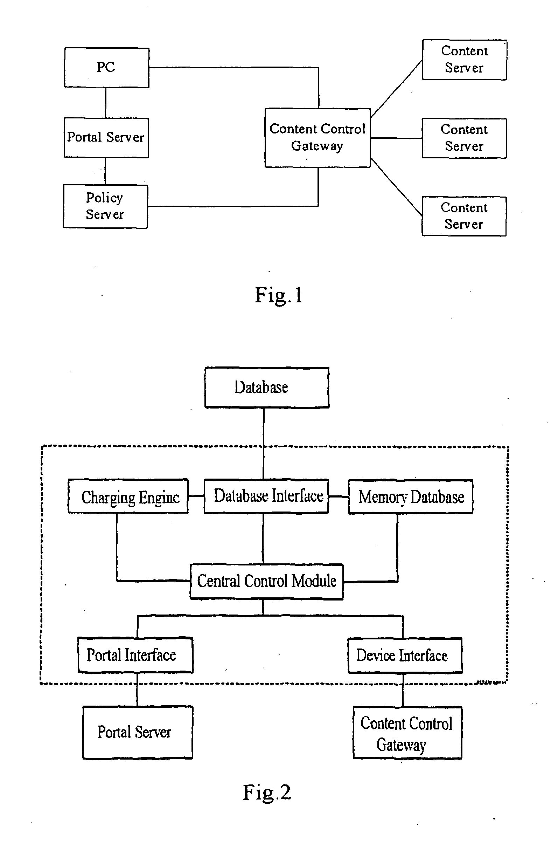

As shown in Figure 1, the system for content charging according to an embodiment of the invention includes a Portal Server, a Policy Server, a Content Control Gateway (CCG) and a Content Server. Wherein, the Policy Server is connected with the Portal Server and the content control gateway, for delivering or canceling a service policy message, and performing rating and charging according to the service usage information reported by the CCG, such as traffic flow and time length. The CCG is connected with the Content Server, for controlling the access to the Content Server of the user, counting the service consumption information, and periodically reporting the related data to the Policy Server for charging. The Portal Server provides a portal for user access, and provides the user with functions such as login, service channel, service selection, self-help service. The Content Server is a server through which the ICP provides contents. There may be a plurality of Content Servers connected with a CCG, and various contents may also be issued on a Content Server. The servers on which the contents exist may be different, and the service ports of the contents, i.e. Transmission Control Protocol/User Data Protocol (TCP/UDP) ports may be different. The CCG distinguishes between the content data flows according to the server on which the contents exist or the service port of the content, and controls the content data flows and collects data respectively for executing the policy.

The service policy message may be regarded as an indication message for the service data flow rules, which comprises parameters such as the source IP address, destination IP address, destination port, service resource information and traffic flow information of a network packet. For example, when a Content Server provides a game service, if a user wants to access the game server, the content of the corresponding service policy message may include the following information: the source IP address (which may be the IP address of the user), the IP address of the game server, the port of the game server (which may refer to the TCP/UDP port), the upstream bandwidth, the downstream bandwidth, the Universal Resource Locator (URL), etc. Thus, if the Policy Server delivers the policy and notifies the CCG, the CCG grants the user the right to access the game server after applying the policy. If the Policy Server instructs the CCG to remove the policy, the current user will lose the right to access the game server.

If the user wants to access a streaming server, the content of the corresponding service policy message may include the following information: the source IP address, the IP address of the streaming server, the port of the streaming server, the upstream bandwidth, the downstream bandwidth and the URL. The Policy Server delivers a policy and notifies the CCG, and the CCG grants the user the right to access the streaming server after applying the policy and reserves a designated bandwidth for the video/audio stream. If the Policy Server instructs the CCG to remove the policy, then the current user will lose the right to access the streaming server.

Similarly, if the user wants to access a download server, the content of the corresponding service policy message may include the following information: the source IP address, the IP address of the download server, the port of the download server, the upstream bandwidth, the downstream bandwidth, and the path of the download file. The Policy Server delivers a policy and notifies the CCG, and the CCG grants the user the right to access the download server after applying the policy and reserves a designated download bandwidth. If the Policy Server instructs the CCG to delete the policy, then the current user will lose the right to access the download server.

Each service and its corresponding service policy are stored in the form of a correlation table between the service and the service policy.

The internal structure of the Policy Server is as shown in Figure 2, which may include a central control module, a charging engine, a portal interface module, a device interface module, a database interface module and a local memory database (Built-in-Memory).

The central control module is the core module of the Policy Server, and is mainly responsible for scheduling and controlling other modules in the system. The central control module receives a service activation request sent from the portal interface module, converts it into a service policy message corresponding to the service, and sends the service policy message to the CCG via the device interface. If the policy is executed successfully, the CCG will periodically report the user service consumption information (mainly including time length and traffic flow information), and the central control module invokes the charging engine module for performing rating after receiving the original charging information from the device interface module.

The portal interface is responsible for interconnecting with the Portal Server, sending the service activation request or the service deactivation request to the central control module, and returning the service request execution result to the Portal Server.

The device interface module is responsible for interconnecting with the CCG, forwarding the policy message delivered by the central control module to the CCG, and reporting the policy execution information and service usage information to the central control module.

The charging engine is the charging component of the Policy Server. The central control module invokes the charging engine for performing rating and accounting according to the user service consumption record.

The database interface enables other subsystems to access the database and the memory database.

The memory database is an optional component, which may be regarded as a buffer for the external database. The memory database is mainly adapted to store policy data, charging data, configuration data and user session data. By using the memory database, the performance of the system may be improved greatly. The central control module periodically sends an instruction to the memory database for reading the policy data, charging data, configuration data from the external database and refreshing the local memory data.

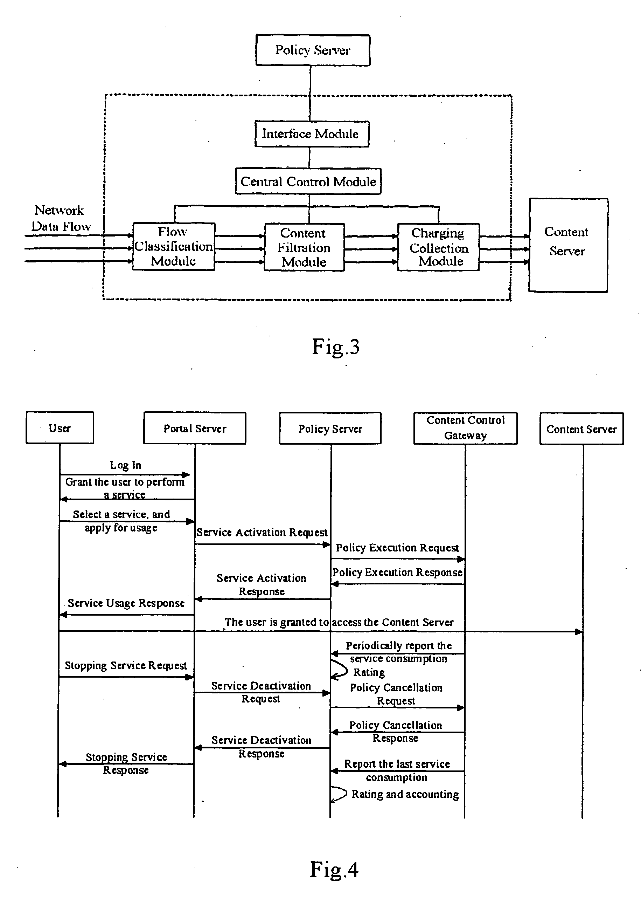

The CCG is adapted to control the access to the Content Server of the user, count the service consumption information, and periodically report related data to the Policy Server for performing charging. As shown, in Figure 3, the internal structure of the CCG includes a central control module, a flow classification module, a content filtration module, a charging collection module and an interface module.

The central control module is responsible for receiving the policy sent from the Policy Server and interpreting and executing the policy. During the execution of the policy, the central control module needs to interact with and control the flow classification module, the content filtration module and the charging collection module.

The flow classification module checks, classifies and controls the information such as the source IP, the destination IP, the destination port of the network packet, on the IP layer. The network flow that conforms to the policy may pass.

The content filtration module checks, classifies and controls the resources to be accessed by the network packet, such as the URL address applied by the HTTP, the file path applied by the FTP (File Transfer Protocol) and the RTICP (Real-Time Streaming Protocol) path applied by the stream media, on the application layer. The network flow that conforms to the policy may pass.

The charging collection module collects the time length and the traffic flow information of the network flow, and reports the original charging data to the central control module. The central control module reports the original charging data to the Policy Server.

In the method according to an embodiment of the invention, Portal Server receives a service request from a user, and sends a service activation request to Policy Server. The Policy Server determines the corresponding service policy message according to the service after receiving the service activation request, and delivers the service policy message to CCG. The CCG executes the policy message, permits the user to use the service, and periodically reports the user service consumption information to the Policy Server. The Policy Server performs rating and charging according to the consumption information.

Specifically, as shown in Figure 4, the method includes following steps.

(1) A user sends a login request to the Portal Server, and the Portal Server authenticates the identity of the user.

(2) If the authentication is passed, the Portal Server receives the service selection data input by the user.

(3) The Portal Server sends a service activation request, which carries information such as the user IP, destination IP, service resources, to the Policy Server.

(4) The Policy Server determines the corresponding service policy message according to the service after receiving the service activation request, and delivers the service policy message to the CCG. Each service and its corresponding service policy are stored in the form of a correlation table between the service and the service policy. This table may be stored on the Policy Server or on a third party device. The Policy Server determines the policy corresponding to the service by querying the correlation table according to the activation request, extracts the parameters needed by the policy according to the activation request and the service policy, fills the parameters in the policy message and delivers the policy message. For example, for a game service, the content of the corresponding service policy message may include the following information: the source IP address (which may be the IP address of the user), the IP address of the game server, the port of the game server (which may refer to the TCP/UDP port), the upstream bandwidth, the downstream bandwidth and the URL.

(5) The CCG receives the service policy message, executes the service policy according to the instruction of the message, releases the access right from the user IP (which may be a source IP) to the destination IP, destination port or destination URL, and controls the network flow according to the bandwidth parameters in the policy. The CCG sends the policy execution result to the Policy Server after executing the policy.

(6) The Policy server informs the Portal Server of the service activation result.

(7) The Portal Server displays the service activation result to the user.

(8) If the service is activated, the user starts an application client end and performs content consumption, after knowing from the Portal Server that the service is available.

(9) The CCG periodically reports the service consumption information to the Policy Server during the content service used by the user.

(10) The Policy Server processes the service consumption information reported by the CCG in real time, and performs rating for the user content consumption.

(11) The Portal Server receives a request for stopping the service from the user when the user wants to logout the Content Server.

(12) The Portal Server sends a service deactivation request to the Policy Server.

(13) The Policy Server delivers a policy cancellation request to the CCG.

(14) The CCG cancels the policy and returns the policy cancellation result to the Policy server.

(15) The Policy server informs the Portal Server of the service cancellation result.

(16) The Portal Server displays the service cancellation result to the user.

(17) The CCG reports the last service consumption information of the user to the Policy Server.

(18) The Policy Server processes the service consumption information, performs rating, and settles accounts on the current content consumption according to each rating information.

In another embodiment of the invention, the content control gateway does not need to periodically report the user service consumption information to the Policy Server. Instead, the content control gateway reports the total service consumption information of the user to the Policy Server at a time after receiving the policy cancellation request delivered by the Policy Server. The Policy Server performs rating and accounting according to the consumption information.

The invention provides a novel content charging solution, by means of which the interconnection difficulty and the interconnection cost between the ICP Content Server and the content platform of the service provider may be lowered greatly, and the ICP may be effectively prevented from falsifying data, and accurate charging data may be provided. In the meanwhile, the corresponding network QoS may be ensured according to the requirements of a certain content service.

## Claims

1. A method for content charging, comprising:
sending, by a Portal Server, a service activation request to a Policy Server, based on a service request from a user;
responding to the service activation request, determining a service policy corresponding to the service request, and delivering a service policy activation message to a content control gateway, by the Policy Server;
executing the service policy and reporting user service consumption information to the Policy Server by the content control gateway; and
permitting the user to use the service, and charging according to the user service consumption information reported by the content control gateway, by the Policy Server.

2. The method according to claim 1, wherein the method further comprises:
sending, by the Portal Server, a service deactivation request to the Policy Server, when a request for stopping the service from the user is received; and
responding to the service deactivation request, delivering a service policy cancellation message, performing rating and accounting according to the consumption information, by the Policy Server.

3. The method according to claim 1 or 2, wherein the method further comprises:
reporting, by the content control gateway, the user service consumption information to the Policy Server periodically during the use of the service;
rating according to the user service consumption information, and accounting on the service consumption of the user according to each rating information after the user stops using the service, by the Policy Server.

4. The method according to claim 1, wherein the method further comprises:
querying a preset correlation table between the service and the service policy according to the service activation request, determining the service policy corresponding to the service, extracting the parameters needed for executing the service policy, filling the parameters in the service policy activation message and delivering the service policy activation message to the content control gateway by the Policy Server.

5. The method according to claim 1, 2 or 4, wherein: the service policy activation message comprises the information of the source IP address, destination IP address, destination port, destination service resource and traffic flow information of the network packet.

6. The method according to claim 5, wherein the method further comprises:
granting the source IP address of the user network packet a right to access the destination IP address, destination port and destination service resource, and controlling the network flow according to the traffic flow information in the service policy message, by the content control gateway.

7. The method according to claim 1, wherein the method further comprises:
obtaining the content data flows according to a Content Server or the service port of the content, controlling the content data flow and collecting the consumption information, by the content control gateway.

8. A Policy Server, for realizing the charging method according to claim 1, wherein the Policy Server comprises a central control module, a charging engine module, a portal interface module and a device interface module, wherein:
the central control module is connected with the charging engine module, portal interface module and device interface module, and is adapted to receive a service activation request sent by the portal interface module, convert the service activation request into a service policy activation message corresponding to the service, deliver the service policy activation message via the device interface, receive user service consumption information reported by the device interface module, and invoke the charging engine module for rating;
the portal interface module is adapted to receive a service request from the user, send a service activation request or a service deactivation request to the central control module, and return the execution result of the service request;
the device interface module is adapted to forward the policy message delivered by the central control module, and report policy execution information and service consumption information to the central control module;
the charging engine module is adapted to receive an invoking instruction from the central control module and perform rating and charging according to the user service consumption information.

9. The server according to claim 8, wherein the server further comprises a database interface and a memory database, through the database interface, an external database and the memory database is accessed; the memory database is adapted to store policy data, charging data, configuration data and user session data, and receive an instruction from the central control module for updating the data.

10. A content control gateway, for implementing the charging method according to claim 1, comprising a central control module, a flow classification module, a content filtration module, a charging collection module and an interface module, wherein:
the central control module is adapted to receive a policy sent by a Policy Server, and interact with the flow classification module, content filtration module and charging collection module for interpreting and executing the policy;
the flow classification module is adapted to check, classify and control a source IP address, a destination IP address and destination port information of a network packet on the IP layer, and only permit a network flow that conforms to the policy to pass;
the content filtration module is adapted to check, classify and control resources to be accessed by the network packet on the application layer, and only permit the network flow that conforms to the policy to pass;
the charging collection module is adapted to collect the time length and the traffic flow information of the network flow, and report original charging data to the central control module;
the interface module is adapted to provide an interface between the central control module and the Policy Server.

11. A system for content charging, comprising a Portal Server and a Content Server, wherein the system further comprises a Policy Server and a content control gateway, the Policy Server is connected with the Portal Server and the content control gateway, and is adapted to receive a service activation request, determine a service policy corresponding to the service activation request, deliver a service policy activation message and a service policy cancellation message, perform rating and charging according to user service consumption information reported by the content control gateway;
the content control gateway is connected with the Content Server and is adapted to control access to the Content Server of the user according to an access right, count the service consumption information and report the user service consumption information to the Policy Server for charging.

12. The system according to claim 11, comprising the Policy Server according to claim 8.

13. The system according to claim 11, comprising the content control gateway according to claim 10.

## Patentansprüche

1. Verfahren zur Inhaltsvergebührung mit den folgenden Schritten:
Senden einer Dienstaktivierungsanforderung durch einen Portalserver zu einem Richtlinienserver auf der Basis einer Dienstanforderung von einem Benutzer;
Antworten auf die Dienstaktivierungsanforderung, Bestimmen einer der Dienstanforderung entsprechenden Dienstrichtlinie und Abliefern einer Dienstrichtlinien-Aktivierungsnachricht an ein Inhaltskontroll-Gateway durch den Richtlinienserver;
Ausführen der Dienstrichtlinie und Melden von Benutzerdienst-Konsuminformationen an den Richtlinienserver durch das Inhaltskontroll-Gateway; und
dem Benutzer gestatten, den Dienst zu benutzen, und Vergebühren gemäß den durch das Inhaltskontroll-Gateway gemeldeten Benutzerdienst-Konsuminformationen durch den Richtlinienserver.

2. Verfahren nach Anspruch 1, wobei das Verfahren ferner die folgenden Schritte umfasst:
Senden einer Dienstdeaktivierungsanforderung durch den Portalserver zu dem Richtlinienserver, wenn eine Anforderung zum Stoppen des Diensts von dem Benutzer empfangen wird; und
Antworten auf die Dienstdeaktivierungsanforderung, Abliefern einer Dienstrichtlinien-Abbruchnachricht, Durchführen von Rating und Buchführung gemäß den Konsuminformationen durch den Richtlinienserver.

3. Verfahren nach Anspruch 1 oder 2, wobei das Verfahren ferner die folgenden Schritte umfasst:
Melden der Benutzerdienst-Konsuminformationen durch das Inhaltskontroll-Gateway an den Richtlinienserver periodisch während der Benutzung des Diensts;
Rating gemäß den Benutzerdienst-Konsuminformationen und Buchführen über den Dienstkonsum des Benutzers gemäß jeder Rating-Information, nachdem der Benutzer aufhört, den Dienst zu benutzen, durch den Richtlinienserver.

4. Verfahren nach Anspruch 1, wobei das Verfahren ferner die folgenden Schritte umfasst:
Abfragen einer voreingestellten Korrelationstabelle zwischen dem Dienst und der Dienstrichtlinie gemäß der Dienstaktivierungsanforderung, Bestimmen der dem Dienst entsprechenden Dienstrichtlinie, Extrahieren der zum Ausführen der Dienstrichtlinie notwendigen Parameter, Eintragen der Parameter in die Dienstrichtlinien-Aktivierungsnachricht und Abliefern der Dienstrichtlinien-Aktivierungsnachricht an das Inhaltskontroll-Gateway durch den Richtlinienserver.

5. Verfahren nach Anspruch 1, 2 oder 4, wobei die Dienstrichtlinien-Aktivierungsnachricht die folgenden Informationen umfasst: Quellen-IP-Adresse, Ziel-IP-Adresse, Zielport, Zieldienstbetriebsmittel und Verkehrsflussinformationen des Netzwerkpakets.

6. Verfahren nach Anspruch 5, wobei das Verfahren ferner die folgenden Schritte umfasst:
der Quellen-IP-Adresse des Benutzernetzwerkpakets ein Recht gewähren, auf die Ziel-IP-Adresse, den Zielport und das Zieldienstbetriebsmittel zuzugreifen, und Steuern des Netzwerkflusses gemäß den Verkehrsflussinformationen in der Dienstrichtliniennachricht durch das Inhaltskontroll-Gateway.

7. Verfahren nach Anspruch 1, wobei das Verfahren ferner die folgenden Schritte umfasst:
Erhalten der Inhaltsdatenflüsse gemäß einem Inhaltsserver oder dem Dienstport des Inhalts, Steuern des Inhaltsdatenflusses und Sammeln der Konsuminformationen durch das Inhaltskontroll-Gateway.

8. Richtlinienserver zum Realisieren des Vergebührungsverfahrens nach Anspruch 1, wobei der Richtlinienserver ein zentrales Steuermodul, ein Vergebührungsengine-Modul, ein Portalschnittstellenmodul und ein Einrichtungsschnittstellenmodul umfasst, wobei
das zentrale Steuermodul mit dem Vergebührungsengine-Modul, dem Portalschnittstellenmodul und dem Einrichtungsschnittstellenmodul verbunden und dafür ausgelegt ist, eine durch das Portalschnittstellenmodul gesendete Dienstaktivierungsanforderung zu empfangen, die Dienstaktivierungsanforderung in eine dem Dienst entsprechende Dienstrichtlinien-Aktivierungsnachricht umzusetzen, die Dienstrichtlinien-Aktivierungsnachricht über die Einrichtungsschnittstelle abzuliefern, durch das Einrichtungsschnittstellenmodul gemeldete Benutzerdienst-Konsuminformationen zu empfangen und das Vergebührungsengine-Modul zum Rating aufzurufen;
das Portalschnittstellenmodul dafür ausgelegt ist, eine Dienstanforderung von dem Benutzer zu empfangen, eine Dienstaktivierungsanforderung oder eine Dienstdeaktivierungsanforderung zu dem zentralen Steuermodul zu senden und das Ausführungsergebnis der Dienstanforderung zurückzugeben;
das Einrichtungsschnittstellenmodul dafür ausgelegt ist, die durch das zentrale Steuermodul abgelieferte Richtliniennachricht weiterzuleiten und Richtlinienausführungsinformationen und Dienstkonsuminformationen an das zentrale Steuermodul zu melden;
das Vergebührungsengine-Modul dafür ausgelegt ist, eine Aufrufanweisung von dem zentralen Steuermodul zu empfangen und gemäß den Benutzerdienst-Konsuminformationen Rating und Vergebührung durchzuführen.

9. Server nach Anspruch 8, wobei der Server ferner eine Datenbankschnittstelle und eine Speicherdatenbank umfasst und durch die Datenbankschnittstelle auf eine externe Datenbank und die Speicherdatenbank zugegriffen wird; die Speicherdatenbank dafür ausgelegt ist, Richtliniendaten, Vergebührungsdaten, Konfigurationsdaten und Benutzersitzungsdaten zu speichern und eine Anweisung von dem zentralen Steuermodul zur Aktualisierung der Daten zu empfangen.

10. Inhaltskontroll-Gateway zum Implementieren des Vergebührungsverfahrens nach Anspruch 1 mit einem zentralen Steuermodul, einem Flussklassifizierungsmodul, einem Inhaltsfiltriermodul, einem Vergebührungssammelmodul und einem Schnittstellenmodul, wobei
das zentrale Steuermodul dafür ausgelegt ist, eine durch einen Richtlinienserver gesendete Richtlinie zu empfangen und mit dem Flussklassifizierungsmodul, dem Inhaltsfiltriermodul und dem Vergebührungssammelmodul zur Interpretation und Ausführung der Richtlinie in Wechselwirkung zu treten;
das Flussklassifizierungsmodul dafür ausgelegt ist, eine Quellen-IP-Adresse, eine Ziel-IP-Adresse und Zielportinformationen eines Netzwerkpakets auf der IP-Schicht zu prüfen, zu klassifizieren und zu steuern und nur einem Netzwerkfluss, der der Richtlinie genügt, zu gestatten durchzugehen;
das Inhaltsfiltriermodul dafür ausgelegt ist, Betriebsmittel, auf die durch das Netzwerkpaket auf der Anwendungsschicht zugegriffen werden soll, zu prüfen, zu klassifizieren und zu steuern und es nur dem Netzwerkfluss, der der Richtlinie genügt, zu gestatten durchzugehen;
das Vergebührungssammelmodul dafür ausgelegt ist, die Zeitlänge und die Verkehrsflussinformationen des Netzwerkflusses zu sammeln und Ursprungsvergebührungsdaten an das zentrale Steuermodul zu melden;
das Schnittstellenmodul dafür ausgelegt ist, eine Schnittstelle zwischen dem zentralen Steuermodul und dem Richtlinienserver bereitzustellen.

11. System zur Inhaltsvergebührung mit einem Portalserver und einem Inhaltsserver, wobei das System ferner einen Richtlinienserver und ein Inhaltskontroll-Gateway umfasst, der Richtlinienserver mit dem Portalserver und dem Inhaltskontroll-Gateway verbunden und dafür ausgelegt ist, eine Dienstaktivierungsanforderung zu empfangen, eine der Dienstaktivierungsanforderung entsprechende Dienstrichtlinie zu bestimmen, eine Dienstrichtlinien-Aktivierungsnachricht und eine Dienstrichtlinien-Abbruchnachricht abzuliefern und Rating und Vergebührung gemäß durch das Inhaltskontroll-Gateway gemeldeten Benutzerdienst-Konsuminformationen durchzuführen;
das Inhaltskontroll-Gateway mit dem Inhaltsserver verbunden und dafür ausgelegt ist, den Zugriff auf den Inhaltsserver des Benutzers gemäß einem Zugangsrecht zu steuern, die Dienstkonsuminformationen zu zählen und die Benutzerdienst-Konsuminformationen zur Vergebührung an den Richtlinienserver zu melden.

12. System nach Anspruch 11, das den Richtlinienserver nach Anspruch 8 umfasst.

13. System nach Anspruch 11, das das Inhaltskontroll-Gateway nach Anspruch 10 umfasst.

## Revendications

1. Procédé de chargement de contenu, comprenant les opérations consistant à :
faire envoyer à un serveur de règles, par un serveur de portail, une demande d'activation de service fondée sur une demande de service émanant d'un usager ;
répondre à la demande d'activation de service, déterminer une règle de service correspondant à la demande de service, et faire délivrer par le serveur de règles un message d'activation de règles de service à une passerelle de commande de contenu ;
exécuter la règle de service et faire en sorte que la passerelle de commande de contenu rapporte les informations de consommation de services Utilisateur au serveur de règles ; et
permettre à l'usager d'utiliser le service, et faire en sorte que le serveur de règles effectue le chargement en fonction des informations de consommation de services Utilisateur ayant été rapportées par la passerelle de commande de contenu.

2. Procédé selon la revendication 1, le procédé comprenant en outre les opérations consistant à :
faire envoyer au serveur de règles, par le serveur de portail, une demande de désactivation de service lorsqu'une demande visant à arrêter le service est reçue de la part de l'usager ; et
répondre à la demande de désactivation de service, délivrer un message d'annulation de règles de service, et faire en sorte que le serveur de règles effectue une taxation et une comptabilisation en fonction des informations de consommation.

3. Procédé selon la revendication 1 ou 2, le procédé comprenant en outre les opérations consistant à :
faire en sorte que la passerelle de commande de contenu rapporte au serveur de règles, à intervalles périodiques, les informations de consommation de services Utilisateur pendant l'utilisation du service ;
faire en sorte que le serveur de règles effectue la taxation en fonction des informations de consommation de services Utilisateur, ainsi que la comptabilisation sur la consommation de services de l'usager en fonction de chaque information de taxation une fois que l'usager cesse d'utiliser le service.

4. Procédé selon la revendication 1, le procédé comprenant en outre les opérations consistant à :
faire en sorte que le serveur de règles interroge une table de corrélation préétablie entre le service et la règle de service en fonction de la demande d'activation de service, détermine la règle de service qui correspond au service, procède à l'extraction des paramètres requis pour exécuter la règle de service, remplisse les paramètres dans le message d'activation de règles de service et délivre le message d'activation de règles de service à la passerelle de commande de contenu.

5. Procédé selon la revendication 1, 2 ou 4, le message d'activation de règles de service comprenant les informations de l'adresse IP source, l'adresse IP destinataire, le port de destination, les ressources du service de destination et les informations du flux de trafic du paquet de réseau.

6. Procédé selon la revendication 5, le procédé comprenant en outre l'opération consistant à :
faire en sorte que la passerelle de commande de contenu accorde à l'adresse IP source du paquet de réseau utilisateur un droit permettant d'accéder à l'adresse IP destinataire, au port de destination et aux ressources du service de destination, et commande le flux du réseau en fonction des informations du flux de trafic se trouvant dans le message de règles de service.

7. Procédé selon la revendication 1, le procédé comprenant en outre l'opération consistant à :
faire en sorte que la passerelle de commande de contenu obtienne les flux de données de contenu en fonction d'un serveur de contenu ou du port de service du contenu, commande le flux de données de contenu et collecte les informations de consommation.

8. Serveur de règles destiné à concrétiser le procédé de chargement selon la revendication 1, le serveur de règles comprenant un module de commande central, un module de moteur de chargement, un module d'interface de portail et un module d'interface de dispositif, dans lequel :
le module de commande central est connecté au module de moteur de chargement, au module d'interface de portail et au module d'interface de dispositif, et est conçu pour recevoir une demande d'activation de service envoyée par le module d'interface de portail, pour convertir la demande d'activation de service en un message d'activation de règles de service correspondant au service, pour délivrer le message d'activation de règles de service par l'intermédiaire de l'interface de dispositif, pour recevoir des informations de consommation de services Utilisateur rapportées par le module d'interface de dispositif, et pour solliciter le module de moteur de chargement à des fins de taxation ;
le module d'interface de portail est conçu pour recevoir une demande de service de la part de l'usager, pour envoyer une demande d'activation de service ou une demande de désactivation de service au module de commande central et pour renvoyer le résultat d'exécution de la demande de service ;
le module d'interface de dispositif est conçu pour transmettre le message de règles délivré par le module de commande central, et pour rapporter des informations d'exécution des règles ainsi que des informations de consommation de service au module de commande central ;
le module de moteur de chargement est conçu pour recevoir une instruction de sollicitation de la part du module de commande central, et pour effectuer une taxation et une facturation en fonction des informations de consommation de services Utilisateur.

9. Serveur selon la revendication 8, le serveur comprenant en outre une interface de base de données et une base de données de mémoire, par l'intermédiaire de l'interface de base de données, une base de données externe et permettant l'accès à la base de données de mémoire ; la base de données de mémoire est conçue pour stocker des données relatives aux règles, des données de chargement, des données de configuration et des données Session d'utilisateur, et pour recevoir une instruction émanant du module de commande central en vue de la mise à jour des données.

10. Passerelle de commande de contenu, pour mettre en oeuvre le procédé de chargement selon la revendication 1, comprenant un module de commande central, un module de classification de flux, un module de filtrage de contenu, un module de collecte de chargements et un module d'interface, dans laquelle :
le module de commande central est conçu pour recevoir une règle envoyée par un serveur de règles, et pour agir en interaction avec le module de classification de flux,
le module de filtrage de contenu et le module de collecte de chargements à des fins d'interprétation et d'exécution de la règle ;
le module de classification de flux est conçu pour vérifier, classifier et commander une adresse IP source, une adresse IP destinataire et des informations de port de destination d'un paquet de réseau sur la couche IP, et pour uniquement autoriser le passage d'un flux de réseau qui est conforme à la règle ;
le module de filtrage de contenu est conçu pour vérifier, classifier et commander des ressources auxquelles le paquet de réseau peut accéder sur la couche Application, et
pour uniquement autoriser le passage du flux de réseau qui est conforme à la règle ;
le module de collecte de chargements est conçu pour recueillir les informations relatives à l'intervalle de temps et au flux de trafic sur le flux de réseau et pour rapporter les données de chargement initiales au module de commande central ;
le module d'interface est conçu pour assurer une interface entre le module de commande central et le serveur de règles.

11. Système pour le chargement de contenu comprenant un serveur de portail et un serveur de contenu, le système comprenant en outre un serveur de règles et une passerelle de commande de contenu, le serveur de règles étant connecté au serveur de portail et à la passerelle de commande de contenu, et étant conçu pour recevoir une demande d'activation de service, pour déterminer une règle de service qui correspond à la demande d'activation de service, pour délivrer un message d'activation de règles de service et un message d'annulation de règles de service, pour effectuer une taxation et une facturation en fonction d'informations de consommation de services Utilisateur rapportées par la passerelle de commande de contenu ;
la passerelle de commande de contenu est connectée au serveur de contenu et est conçue pour commander l'accès au serveur de contenu de l'usager en fonction d'un droit d'accès, pour effectuer le décompte des informations de consommation de service et pour rapporter au serveur de règles les informations de consommation de services Utilisateur à des fins de facturation.

12. Système selon la revendication 11, comprenant le serveur de règles selon la revendication 8.

13. Système selon la revendication 11, comprenant la passerelle de commande de contenu selon la revendication 10.
